(19) Europäisches Patentamt
European Patent Office
Office européen des brevets

(11) **EP 0 902 568 B1**

(12) **EUROPÄISCHE PATENTSCHRIFT**

(45) Veröffentlichungstag und Bekanntmachung des Hinweises auf die Patenterteilung:
**05.12.2012   Patentblatt 2012/49**

(51) Int Cl.:
*H04L 9/18* (2006.01)          *H04L 9/08* (2006.01)
*H04L 9/00* (2006.01)

(21) Anmeldenummer: **98115664.9**

(22) Anmeldetag: **20.08.1998**

(54) **Verfahren zur Übertragung von verschlüsselten Nachrichten**

Method for transmitting encrypted messages

Procédé de transmision de messages chiffrés

(84) Benannte Vertragsstaaten:
**AT BE CH CY DK ES FI FR GB GR IE IT LI LU MC NL PT SE**

(30) Priorität: **13.09.1997   DE 19740333**

(43) Veröffentlichungstag der Anmeldung:
**17.03.1999   Patentblatt 1999/11**

(73) Patentinhaber: **Deutsche Telekom AG**
**53113 Bonn (DE)**

(72) Erfinder:
• **Schwenk, Jörg, Dr.**
**91239 Henfenfeld (DE)**
• **Heuser, Stephan, Dipl.-Ing.**
**64289 Darmstadt (DE)**

(56) Entgegenhaltungen:
• **CHOR B ET AL: "Tracing traitors" ADVANCES IN CRYPTOLOGY (CRYPTO). SANTA BARBARA, AUG. 21 - 25, 1994, PROCEEDINGS OF THE ANNUAL INTERNATIONAL CRYPTOLOGY CONFERENCE (CRYPTO), BERLIN, SPRINGER, DE, Bd. CONF. 14, 1. August 1994 (1994-08-01), Seiten 257-270, XP002097845 ISBN: 3-540-58333-5**

## Beschreibung

Die Erfindung betrifft ein Verfahren zur Übertragung von verschlüsselten Nachrichten, wie es in Anspruch 1 oder in Anspruch 8 umschrieben ist.

Ausgangspunkt für die Erfindung sind symmetrische Verschlüsselungsverfahren, bei denen zur Verschlüsselung und Entschlüsselung von Daten der Sender bzw. der Empfänger den gleichen Schlüssel benötigt. Derartige Verfahren werden schon seit geraumer Zeit auf dem militärischen und industriellen Bereich angewandt. Ein bekanntes symmetrisches Verschlüsselungsverfahren ist der von IBM entwickelte und 1977 standardisierte DES-Algorithmus (Data Encryption Standard). Eine Einführung in die Theorie symmetrischer Verschlüsselungsverfahren und eine Übersicht über die gängigen Methoden findet man unter anderem in A. Beutelsbacher "Kryptologie", Vieweg Verlag, 1991.

Benutzer digitaler Kommunikationssysteme erwarten, daß ihre vertraulichen Nachrichten mit einem so hohen Sicherheitsgrad verschlüsselt werden, daß idealerweise nur der Empfänger mit dem richtigen Schlüssel die chiffrierte Nachricht entschlüsseln kann. Auf der anderen Seite gibt es u. a. staatliche Institutionen, wie z. B. die Polizei, die an einer Einschränkung der Wirkung kryptografischer Verfahren interessiert sind, um Gespräche und Daten von kriminellen Personen oder staatsgefährdenden Organisationen entschlüsseln zu können. Der Sicherheitsgrad von symmetrischen Verschlüsselungstechniken kann dadurch verringert werden, daß die maximale Länge der verwendeten kryptografischen Schlüssel begrenzt wird. So erlaubt beispielsweise die amerikanische Regierung nur den Export von symmetrischen Verschlüsselungsverfahren, bei denen Schlüssel nur mit einer maximalen effektiven Länge von 40 Bit verwendet werden. Die Schlüssellänge ist dabei ein Maß für die Größe des zu durchsuchenden Schlüsselraums. Bei einer Schlüssellänge von 40 Bit müssen maximal $2^{40}$ verschiedene Schlüssel ausprobiert werden, bevor man den richtigen gefunden hat.

Es ist bekannt, symmetrische Verschlüsselungsverfahren in sogenannten Pay-TV-Systemen anzuwenden, bei denen Audio- und Video-Daten selektiv über ein Rundfunkmedium, wie z. B. Satellit oder Breitbandkoaxialkabel an seine Kunden verteilt werden. Für die Übertragung solcher Daten reicht gewöhnlich eine Schlüssellänge von 40 Bit aus, da die verwendeten Schlüssel häufig wechseln (etwa alle 10 Sekunden), und der Aufwand für das vollständige Durchsuchen des Schlüsselraums der Größe $2^{40}$ heute noch bei einigen Wochen liegt. Dieses Verschlüsselungsverfahren erweist sich dann als nachteilig, wenn beispielsweise vertrauliche Firmendaten im Rahmen einer Business-TV-Veranstaltung mit dem gleichen System verteilt werden sollen. Da aber die Übertragung von vertraulichen Firmendaten, beispielsweise in einer EXCEL-Datei, in weniger als 10 Sekunden erfolgen und darüber hinaus der Inhalt der Datei auch noch nach einigen Wochen wertvoll sein kann, lohnt sich ein entsprechender Aufwand zur Entschlüsselung der Daten allemal.

In dem Aufsatz "Tracing Traitors ADVANCES IN CRYPTOLOGY (CRYPTO). SANTA BARBARA, AUG. 21 - 25, 1994, PROCEEDINGS OF THE ANNUAL INTERNATIONAL CRYPTOLOGY CONFERENCE (CRYPTO), BERLIN, SPRINGER, DE, Bd. CONF. 14, 1. August 1994 (1994-08-01), Seiten 257-270, XP002097845 ISBN: 3-540-58333-5" beschreiben CHOR B et al. ein Verfahren, mit welchem Verräter aufgefunden werden können, die unberechtigten Benutzern ihre geheimen Schlüssel zur Entschlüsselung von verschlüsselten Nachrichten übergeben haben. Zunächst wird jedem Benutzer wenigstens ein persönlicher Schlüssel übergeben, der aus mehreren Schlüsseln zusammengesetzt ist. Um eine Nachricht zu einem Benutzer zu übertragen, wird die zu übertragende Nachricht mit einem einzigen Nachrichtenschlüssel verschlüsselt und einem Verschlüsselungsblock einer Meldung übergeben. Zusätzlich zur verschlüsselten Nachricht wird ein Freigabeblock in der Meldung übertragen, in dem ein mit mehreren Schlüsseln verschlüsseltes Geheimnis mit übertragen wird. Mit Hilfe seines persönlichen Schlüssels, der aus mehreren Schlüsseln besteht, kann der Benutzer das im Freigabeblock übertragene Geheimnis entschlüsseln und daraus den Nachrichtenschlüssel berechnen, mit dem die verschlüsselte Nachricht entschlüsselt werden kann.

Der Aufsatz beschäftigt sich nicht mit der Problemstellung, den Sicherheitsgrad bei der Übertragung von symmetrisch verschlüsselten Nachrichten zu erhöhen, wenn die Schlüssellänge beispielsweise aufgrund gesetzlicher Bestimmungen auf eine maximale Länge begrenzt ist.

Der Erfindung liegt daher die Aufgabe zugrunde, ein Verfahren zur Übertragung von verschlüsselten Nachrichten verfügbar zu machen, bei dem zwar herkömmliche kryptographische Schlüssel mit vorbestimmter Länge verwendet werden, die zu übertragende Nachricht aber mit einem Sicherheitsgrad verschlüsselt werden kann, der höher ist als der mit bekannten Verschlüsselungsverfahren erreichbare.

Das technische Problem löst die Erfindung einmal mit den Verfahrensschritten des Anspruchs 1 und zum anderen mit den Verfahrensschritten des Anspruchs 8.

Vorteilhafte Weiterbildungen sind in den Unteransprüchen angegeben.

Wie bereits erwähnt, basiert das erfindungsgemäße Verfahren auf an sich bekannten Verschlüsselungsverfahren. Kerngedanke der Erfindung ist es, die Nachricht gemäß einer vorbestimmten mathematischen Gleichung in Teilnachrichten mit zufälligem Charakter zu zerlegen, die Teilnachrichten unabhängig voneinander zu verschlüsseln und zu übertragen, so daß die Nachricht tatsächlich mit einem höheren Sicherheitsgrad übertragen wird.

Dazu wird zunächst die zu übertragende Nachricht in T Teilnachrichten $m_1 \ldots m_T$ zerlegt. Anschließend wird jede Teilnachricht $m_i$ mit einem individuellen Schlüssel $k_i$ der Länge l gemäß der Vorschrift

EP 0 902 568 B1

$$c_i \; := \; E(k_i, m_i)$$

verschlüsselt, so daß die zu übertragende Gesamtnachricht tatsächlich mit einem Schlüssel der Länge L verschlüsselt wird, wobei L > l ist. Auf diese Weise wird die zu übertragende Gesamtnachricht mit einem höheren Sicherheitgrad verschlüsselt.

Der Sicherheitsgrad kann weiter gesteigert werden, wenn die Teilnachrichten den Charakter eines Zufallswertes haben, so daß eine kriminelle Person, die die chiffrierte Gesamtnachricht entschlüsseln möchte, jeden individuellen Schlüssel $k_i$, mit dem die jeweilige Teilnachricht $m_i$ verschlüsselt worden ist, auffinden muß. Bei einer Schlüssellänge von l und T zufällig gebildeten Teilnachrichten - dies entspricht einer tatsächlichen Schlüssellänge von l*T - ist die Größe des zu durchsuchenden Schlüsselraums somit $2^{l*T}$. Ohne Anwendung des erfinderischen Verfahrens wäre die Größe des zu durchsuchenden Schlüsselraums lediglich $2^l$. Als Zufallszahl oder Zufallswert kann erfindungsgemäß eine zufällige Bitfolge verstanden werden.

Die so verschlüsselten Teilnachrichten $c_i$ werden zu einer Empfangseinrichtung übertragen.

In der Empfangseinrichtung wird jede Teilnachricht $m_i$ mit dem individuellen Schlüssel $k_i$, mit dem sie zuvor verschlüsselt worden ist, entschlüsselt. Danach wird die ursprüngliche Nachricht aus den dechiffrierten Teilnachrichten wieder rekonstruiert.

Ein Vorteil des erfindungsgemäßen Verfahrens liegt darin, daß man bestehende Geräte und Syteme zur Ver- und Entschlüsselung, die aufgrund verwendeter kryptographischer Schlüssel mit vorbestimmter Länge nur einen relativ niedrigen Sicherheitsgrad bieten, dazu benutzen kann, hochsensitive Daten mit einem höheren Sicherheitsgrad zu übertragen.

Es gibt mehrere an sich bekannte Algorithmen, mit deren Hilfe die zu übertragende Nachricht in T zufällig gebildete Teilnachrichten zerlegt werden kann. Solche Algorithmen können z. B. auf einer additiven, Exklusiv-ODER-oder einer multiplikativen Verknüpfung basieren.

Die Algorithmen zur Berechnung der Teilnachrichten sowie die zur Berechnung der ursprünglichen Nachricht verwenden endliche mathematische Strukturen.

Um das System resistent gegen den Verlust einzelner Teilnachrichten auf dem Übertragungsweg zu machen, kann die zu übertragende Nachricht unter Anwendung eines an sich bekannten (p,T)-Threshold-Verfahrens in T Teilnachrichten zerlegt werden. Die Teilnachrichten werden wiederum mit Hilfe individueller kryptographischer Schlüssel verschlüsselt und übertragen. Da die Teilnachrichten mit Hilfe eines (p, T)-Threshold-Verfahrens erzeugt worden sind, kann die Empfangseinrichtung die ursprüngliche Nachricht aus p entschlüsselten Teilnachrichten rekonstruieren, wobei p < T ist. Mit anderen Worten ist die Empfangseinrichtung aufgrund des angewandten Threshold-Verfahrens in der Lage, die Gesamtnachricht zu rekonstruieren, auch wenn während der Übertragung Teilnachrichten zerstört worden oder verlorengegangen sind.

Gemäß einer alternativen Ausführungsform der Erfindung ist es möglich, Daten bei nur geringfügig höherer Datenübwertragungsrate mit einem höheren Sicherheitsgrad zu übertragen. Dies wird dadurch erreicht, daß höchstens T-1 Teilnachrichten durch einen Wert ersetzt werden, dessen Länge kleiner als die Länge der jeweiligen Teilnachricht ist. Anschließend werden die jeweiligen Werte und die übrigen Teilnachrichten mit einem individuellen Schlüssel verschlüsselt. Die verschlüsselten Werte und Teilnachrichten werden zu einer Empfangseinrichtung übertragen, in der sie entschlüsselt und zur Gesamtnachricht wieder zusammengesetzt werden. Verfahren zur Reduzierung der Teilnachrichten sind dem Fachmann bekannt. Beispielsweise kann die Teilnachricht $m_1$ aus einem Wert $x_i$ dadurch gebildet werden, daß der Wert $x_i$ mehrfach hintereinander (konkateniert) wird, bis die Länge von m erreicht ist, wobei $m_i = x_i \| x_1 \| x_1 \ldots \| x_i$.

Bei einer längeren Nachricht kann es sinnvoll sein , sie in mehrere Datenblöcke zu unterteilen, bevor die Nachricht in T Teilnachrichten zerlegt wird. Das erfindungsgemäße Verfahren wird anschließend auf jeden Datenblock angewandt.

Um den Sicherheitsgrad einer zu übertragenden Nachricht weiter erhöhen zu können, werden die individuellen Schlüssel für jeden Datenblock neu berechnet. Dieses Verfahren ist unter anderem aus Pay-TV-Systemen bekannt, bei denen die verwendeten Schlüssel häufig gewechselt werden.

Die Erfindung wird nachfolgend anhand von zwei Ausführungsbeispielen näher erläutert.

Anhand des folgenden Beispiels soll verständlich gemacht werden, wie der Sicherheitsgrad für eine zu übertragende Nachricht m verdoppelt werden kann. Es sei angenommen, daß die verwendeten individuellen kryptographischen Schlüssel eine Schlüssellänge von l Bits haben, wobei l = 40 sei. Ferner sei angenommen, daß es sich bei der zu verschlüsselnden Nachricht m um eine binäre Nachricht handelt, die mehrere Bits umfaßt. Um die zu verschlüsselnde Nachricht m zufällig in Teilnachrichten zerlegen zu können, wird ein Summenalgorithmus gemäß der Vorschrift

$$m = m_1 + m_2 \; := \; (m - r) + r$$

angewandt. In diesem Beispiel wird also die Gesamtnachricht in zwei Teilnachrichten $m_1$ und $m_2$ zerlegt. Dabei ist r eine Bitfolge, die in einem Zufallsgenerator erzeugt wird. Mit Hilfe der Zufallszahl r können die beiden Teilnachrichten ebenfalls als Zufallswerte ausgedrückt werden, d. h. $m_1$ durch m - r und $m_2$ durch r. Wichtig bei der oben beschriebenen Zerlegung ist, daß jede Teilnachricht für sich betrachtet eine Zufallszahl ist (beispielsweise eine zufällige 64-BitFolge, falls der Nachrichtenraum aus 64-Bit-Wörtern besteht). Anschließend wird jede Teilnachricht mit Hilfe eines an sich bekannten symmetrischen Verschlüsselungsverfahrens, das individuelle Schlüssel der Länge l verwendet, gemäß der Vorschrift

$$c_1 := E(k_1, m_1)$$

$$c_2 := E(k_2, m_2)$$

chiffriert, wobei $k_1$ und $k_2$ zwei voneinander unabhängige Schlüssel sind, die beispielsweise jeweils eine Schlüssellänge von l = 40 Bits aufweisen. Die chiffrierten Texte $c_1$ und $c_2$ der Teilnachrichten $m_1$ und $m_2$ werden an eine Empfangseinrichtung übertragen. Nur wenn die Empfangseinrichtung in der Lage ist, die beiden Chiffriertexte der Teilnachrichten $m_1$ und $m_2$ zu entschlüsseln, kann die ursprüngliche Nachricht m rekonstruiert werden. Deshalb muß jeder der $2^l$ möglichen Schlüssel $k_1$, der auf die chiffrierte Teilnachricht $c_1$ angewendet einen Klartext $m_1$ ergibt, mit jedem der $2^l$ möglichen Schlüssel $k_2$, der auf die chiffrierte Teilnachricht $c_2$ angewendet einen Klartext $m_1$ liefert, kombiniert werden. Anschließend wird getestet, ob die dechiffrierten Teilnachrichten $m_1$ und $m_2$ zusammen einen sinnvollen Text ergeben. Mit anderen Worten müssen $2^{2*l}$ mögliche Schlüsselpaare durchprobiert werden, um festzustellen, ob der Klartext m Sinn macht. Das erfindungsgemäße Verfahren bewirkt, daß, obwohl das Verschlüsselungssystem lediglich Schlüssel der Länge l benutzt, der gesamte Text m einen Sicherheitsgrad aufweist, als wäre er mit einem Schlüssel der Länge 2l verschlüsselt worden.

Um den Sicherheitsgrad einer zu verschlüsselnden Nachricht erfindungsgemäß zu erhöhen, d. h. die tatsächliche Schlüssellänge l scheinbar auf eine Gesamtlänge T x l zu verlängern, muß die Nachricht m in T zufällig gebildete Teilnachrichten zerlegt werden. Nachfolgend sind beispielhaft drei Zerlegungsvorschriften definiert:

$$m = m_1 + m_2 + \ldots m_{T-1} + m_T := (m - r_1) + (-r_2) + \ldots + (-r_{T-1}) + (r_1 + r_2 + \ldots + r_{T-1})$$
$$(1),$$

wobei $r_1$, $r_2$ ... $r_{T-1}$ Zufallszahlen sind. Um Rechenfehler zu vermeiden, wird man derartige Rechnungen am besten modulo einer festen Zahl, z. B. $2^{64}$, durchführen. Die T Teilnachrichten werden dann mit T unabhängigen Schlüsseln $k_1$, $k_2$ ... $k_T$ verschlüsselt.

$$m = m_1 \oplus m_2 \oplus \ldots \oplus m_T = (m \oplus r_1) \oplus r_2 \oplus \ldots \oplus r_{T-1} \oplus (r_1 \oplus r_2 \oplus \ldots \oplus r_{T-1})$$
$$(2)$$

$$m = m_1 * m_2 * \ldots * m_T = (m/r_1) * (1/r_2) * \ldots * (1/r_{T-1}) * (r_1 * r_2 * \ldots * r_{T-1})$$
$$(3)$$

Um in der Empfangseinrichtung die ursprüngliche Nachricht m auch dann rekonstruieren zu können, wenn während der Übertragung Teilnachrichten zerstört oder verloren gehen, wird ein an sich bekanntes (p,T)-Threshold-Verfahren (auch Secret Sharing Schemes genannt) angewandt, um die Nachrichten m in T Teilnachrichten zu zerlegen. Das (p,T)-Threshold-Verfahren ist unter anderem in der Literatur "Moderne Verfahren der Kryptographie", Vieweg Verlag, 1995, Beutelspacher, Schwenk, Wolfenstetter, beschrieben. Bei einem möglichen (2,T)-Threshold-Verfahren wird eine lineare, eine vorbestimmte Steigung aufweisende Gerade benutzt, auf der die Teilnachrichten liegen. Bei einem solchen Graphen ist es möglich, bereits aus zwei korrekt empfangenen Teilnachrichten die ursprüngliche Nachricht m zu rekonstruieren.

Mit dem oben beschriebenen Verfahren kann zwar der Sicherheitsgrad einer zu übertragenden Nachricht bei Verwendung von herkömmlichen Schlüsseln verbessert werden; doch ist hierzu eine höhere Datenübertragungsrate erforderlich. Beispielsweise wird die Datenübertragungsrate verdoppelt, wenn die Nachricht in zwei Teilnachrichten zerlegt wird.

Gemäß einer zweiten Ausführungsform ist es möglich, den Nachteil einer höheren Datenübertragungsrate zu beseitigen. Dies kann man in unserem Beispiel dadurch erreichen, daß, nachdem die Nachricht m in zwei Teilnachrichten unterteilt worden ist, lediglich die Teilnachricht $m_1$ mit einem individuellen Schlüssel verschlüsselt und in voller Länge übertragen wird. Die Teilnachricht $m_2$ aus einem kürzeren Wert gebildet, wobei danach nur der kürzere Wert verschlüsselt und übertragen wird. Auf diese Weise wird Datenübertragungsrate reduziert. Verfahren zur Ermittlung eines Wertes, aus dem die Teilnachricht $m_2$ hergeleitet werden kann und dessen Länge kürzer ist als die Länge der Teilnachricht $m_2$, sind allgemein bekannt. Beispielsweise verwendet man einen Wert, der eine zufällig erzeugte Bitfolge darstellt, wobei die Teilnachricht $m_2$ durch Wiederholung des Wertes beschrieben ist. Eine andere Möglichkeit, die Teilnachricht $m_2$ zu verkürzten, besteht darin, daß man einen kürzeren Wert in Form einer Bitfolge wählt, der als Startwert in einen Pseudozufallsgenerator eingegeben wird, der eine Pseudozufallszahl r erzeugt. Anstatt wie in unserem ersten Beispiel die verschlüsselte Teilnachricht $m_1$, die durch den Ausdruck m - r dargestellt wird, und die verschlüsselte Teilnachricht $m_2$, die durch den Wert r dargestellt ist, zu übertragen, wird nunmehr zwar die verschlüsselte Teilnachricht $m_1$ unverändert übertragen, aber anstelle der Teilnachricht $m_2$ wird nun der Startwert, der eine kürzere Bitfolge darstellt als die Teilnachricht $m_2$, verschlüsselt und übertragen. Wird in der Empfangseinrichtung derselbe Pseudozufallsgenerator verwendet, kann mit Hilfe des übertragenen Startwertes die Pseudozufallsfolge bzw. Pseudozufallszahl r berechnet werden, aus der wiederum die Teilnachrichten $m_1$ und $m_2$ berechnet werden können.

## Patentansprüche

1. Verfahren zur Übertragung von verschlüsselten Nachrichten, mit folgenden Verfahrensschritten:

   a) die zu übertragende Nachricht wird **gemäß einer vorbestimmten mathematischen Gleichung** in T Teilnachrichten $(m_1...m_T)$ zerlegt, **wobei die Teilnachrichten $(m_1...m_T)$ den Charakter von Zufallszahlen haben.**
   b) jede Teilnachricht wird mit einem individuellen Schlüssel der Länge l verschlüsselt, so daß die zu übertragende Nachricht tatsächlich mit einem Schlüssel der Länge L verschlüsselt wird, wobei L größer als 1 ist,
   c) die in Schritt b) verschlüsselten Teilnachrichten werden zu einer Empfangseinrichtung übertragen.

2. Verfahren nach Anspruch 1, **dadurch gekennzeichnet, daß** die empfangenen Teilnachrichten in der Empfangseinrichtung mittels der ihnen zugeordneten individuellen Schlüssel entschlüsselt und zur ursprünglichen Nachricht zusammengesetzt werden.

3. Verfahren nach Anspruch 1 oder 2, **dadurch gekennzeichnet, daß** die zu übertragende Nachricht in Schritt a) gemäß der Gleichung

$$m = m_1 + m_2 + ...m_{T-1} + m_T := (m - r_1) + (-r_2) + .. + (-r_{T-1}) + (r_1 + r_2 + ... + r_{T-1})$$

zerlegt wird, wobei $r_i$ eine zufällige Zahl ist.

4. Verfahren nach Anspruch 1 oder 2, **dadurch gekennzeichnet, daß** die zu übertragende Nachricht in Schritt a) gemäß der Gleichung
$m = m_1 \oplus m_2 \oplus ... \oplus m_T = (m \oplus r_1) \oplus r_2 \oplus ... \oplus r_{T-1} \oplus (r_1 \oplus r_2 \oplus ... \oplus r_{T-1})$ zerlegt wird, wobei $r_i$ eine Zufallszahl ist.

5. Verfahren nach Anspruch 1, **dadurch gekennzeichnet, daß** die zu übertragende Nachricht in Schritt a) gemäß der Gleichung
$m = m_1 * m_2 * ... * m_T = (m/r_1) * (1/r_2) * ... * (1/r_{T-1}) * (r_1 * r_2 * ... r_{T-1})$ zerlegt wird, wobei $r_i$ eine Zufallszahl ist.

6. Verfahren nach einem der Ansprüche 1 bis 5, **dadurch gekennzeichnet, daß** die Teilnachrichten in einer endlich mathematischen Struktur liegen und die Berechnung der Gesamtnachricht in einer endlichen mathematischen Struktur durchgeführt wird.

**7.** Verfahren nach Anspruch 1, **dadurch gekennzeichnet, daß** in Schritt a) die zu übertragende Nachricht unter Anwendung eines (p, T)-Threshold-Verfahrens in T Teilnachrichten zerlegt wird, so daß in der Empfangseinrichtung die ursprüngliche Nachricht aus p entschlüsselten Teilnachrichten rekonstruiert werden kann, wobei p kleiner als T ist.

**8.** Verfahren zur Übertragung von verschlüsselten Nachrichten,
mit folgenden Verfahrensschritten:

a) die zu übertragende Nachricht wird in T zufällig gebildete Teilnachrichten ($m_1...m_T$) zerlegt,
b) höchstens T-1 Teilnachrichten werden durch einen Wert ersetzt, dessen Länge kleiner als die Länge der jeweiligen Teilnachricht ist,
c) die Werte und die übrigen Teilnachrichten werden mit einem individuellen Schlüssel verschlüsselt, und
d) die in Schritt c) verschlüsselten Werte und Teilnachrichten werden zu einer Empfangseinrichtung übertragen.

**9.** Verfahren nach einem der Ansprüche 1 bis 8, **dadurch gekennzeichnet, daß** vor Durchführung des Schrittes a) die zu übertragende Nachricht in mehrere Datenblöcke unterteilt wird.

**10.** Verfahren nach Anspruch 9, **dadurch gekennzeichnet, daß** die Schlüssel für jeden Datenblock neu berechnet werden.

**Claims**

**1.** Method for transmitting encrypted messages,
having the following steps:

a) the message to be transmitted is broken down into T message parts ($m_1 ... m_T$) according to a predetermined mathematical equation, wherein the message parts ($m_1 ... m_T$) have the character of random numbers,
b) each message part is encrypted with a individual key of length I, so that the message to be transmitted is actually encrypted with a key of length L,
where L is greater than I,
c) the message parts encrypted in step b) are transmitted to a receiving device.

**2.** Method according to claim 1, **characterized in that** the received message parts are decrypted in the receiving device by means of the individual keys associated with them and are assembled into the original message.

**3.** Method according to claim 1 or 2, **characterized in that** the message to be transmitted is broken down in step a) according to the equation $m = m_1+m_2+...+m_{T-1}+m_T := (m-r_1)+(-r_2)+...+(-r_{T-1})+(r_1+r_2+...+r_{T-1})$, wherein $r_i$ is a random number.

**4.** Method according to claim 1 or 2, **characterized in that** the message to be transmitted is broken down in step a) according to the equation $m = m_1 \oplus m_2 \oplus ... \oplus m_T = (m \oplus r_1) \oplus r_2 \oplus ... \oplus r_{T-1} \oplus (r_1 \oplus r_2 \oplus ... r_{T-1})$, wherein $r_i$ is a random number.

**5.** Method according to claim 1, **characterized in that** the message to be transmitted is broken down in step a) according to the equation $m = m_1 * m_2 * ... * m_T = (m/r_1)*(1/r_2)*...*(1/r_{T-1})*(r_1*r_2*...*r_{T-1})$, wherein $r_i$ is a random number.

**6.** Method according to any one of claims 1 through 5, **characterized in that** the message parts are in a finite mathematical structure and the calculation of the complete message is carried out in a finite mathematical structure.

**7.** Method according to claim 1, **characterized in that** in step a) the message to be transmitted is broken down into T message parts using a (p, T) threshold method, so that the original message can be reconstructed in the receiving device from p decrypted message parts, where p is smaller than T.

**8.** Method for transmitting encrypted messages,
having the following steps:

a) the message to be transmitted is broken down into T randomly formed message parts ($m_1 ... m_T$),
b) at most T-1 message parts are replaced by a value whose length is shorter than the length of the applicable message part,

c) the values and the remaining message parts are encrypted with an individual key, and

d) the values and message parts encrypted in step c) are transmitted to a receiving device.

9. Method according to any one of claims 1 through 8, **characterized in that** the message to be transmitted is subdivided into multiple data blocks before step a) is performed.

10. Method according to claim 9, **characterized in that** the keys are calculated anew for each data block.

**Revendications**

1. Procédé de transmission de messages cryptés, comprenant les étapes de procédé suivantes:

    a) le message à transmettre est décomposé en T messages partiels ($m_1$ ... $m_T$) selon une équation mathématique prédéterminée, les messages partiels ($m_1$ ... $m_T$) ayant le caractère de nombres aléatoires,
    b) chaque message partiel est crypté à l'aide d'une clé individuelle de longueur I de manière que le message à transmettre soit effectivement crypté à l'aide d'une clé de longueur L, L étant plus grand que I,
    c) les messages partiels cryptés à l'étape b) sont transmis à un dispositif de réception.

2. Procédé selon la revendication 1, **caractérisé en ce que** les messages partiels reçus dans le dispositif de réception sont décryptés à l'aide de la clé individuelle qui leur est affectée et assemblés pour former le message d'origine.

3. Procédé selon la revendication 1 ou 2, **caractérisé en ce que** le message à transmettre est décomposé à l'étape a) selon l'équation
   $m = m_1+m_2+...+ m_{T-1}+m_T := (m-r_1)+(-r_2)+...+(-r_{T-1})+(r_1+r_2+...+r_{T-1})$, $r_i$ étant un nombre aléatoire.

4. Procédé selon la revendication 1 ou 2, **caractérisé en ce que** le message à transmettre est décomposé à l'étape a) selon l'équation
   $m = m_1 \oplus m_2 \oplus ... \oplus m_T = (m \oplus r_1) \oplus r_2 \oplus ... \oplus r_{T-1} \oplus (r_1 \oplus r_2 \oplus ... \oplus r_{T-1})$, $r_i$ étant un nombre aléatoire.

5. Procédé selon la revendication 1, **caractérisé en ce que** le message à transmettre est décomposé à l'étape a) selon l'équation
   $m = m1*m2*...*m_T = (m/r_1) * (1/r_2) * ... * (1/r_{T-1}) * (r_1*r_2*...*r_{T-1})$, $r_i$ étant un nombre aléatoire.

6. Procédé selon l'une des revendications 1 à 5, **caractérisé en ce que** les messages partiels sont situés dans une structure mathématique finie et le calcul du message complet est effectué dans une structure mathématique finie.

7. Procédé selon la revendication 1, **caractérisé en ce que**, à l'étape a), le message à transmettre est décomposé en T messages partiels en utilisant un procédé de seuil (p, T) de manière à permettre la reconstruction du message d'origine à partir de p messages partiels décryptés dans l'unité de réception, p étant plus petit que T.

8. Procédé de transmission de messages cryptés, comprenant les étapes de procédé suivantes:

    a) le message à transmettre est décomposé en T messages partiels ($m_1$ ... $m_T$) formés de manière aléatoire,
    b) T-1 messages partiels au maximum sont remplacés par une valeur dont la longueur est plus petite que la longueur du message partiel respectif,
    c) les valeurs et les messages partiels restants sont cryptés à l'aide d'une clé individuelle, et
    d) les valeurs et messages partiels cryptés à l'étape c) sont transmis à un dispositif de réception.

9. Procédé selon l'une des revendications 1 à 8, **caractérisé en ce que**, avant la réalisation de l'étape a), le message à transmettre est divisé en plusieurs blocs de données.

10. Procédé selon la revendication 9, **caractérisé en ce que** les clés sont recalculées pour chacun des blocs de données.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **A. BEUTELSBACHER.** Kryptologie. Vieweg Verlag, 1991
- Tracing Traitors ADVANCES IN CRYPTOLOGY (CRYPTO). SANTA BARBARA. **CHOR B.** PROCEEDINGS OF THE ANNUAL INTERNATIONAL CRYPTOLOGY CONFERENCE (CRYPTO. SPRINGER, 01. August 1994, 257-270
- Moderne Verfahren der Kryptographie. Vieweg Verlag, 1995